# EUROPEAN PATENT APPLICATION

(11) **EP 4 831 766 A1**
(43) Date of publication of application: **28.10.2026**
(21) Application number: 25819177.4
(22) Date of filing: 03.06.2025
(51) Int. Cl.: G05D 1/43

(54) **METHOD FOR MOVING SELF-MOVING DEVICE IN LARGE AREA, AND SELF-MOVING DEVICE AND STORAGE MEDIUM**

(30) Priority: 03.06.2024 CN 202410703814
(71) Applicant: Shenzhen Hanyang Technology Co., Ltd., Shenzhen, Guangdong 518000 (CN)
(72) Inventor: HUANG, Yang, Shenzhen, Guangdong 518000 (CN); LI, Jialai, Shenzhen, Guangdong 518000 (CN)
(74) Representative: Abel & Imray LLP
(86) International application number: PCT/CN2025/098776
(87) International publication number: WO 2025/252065

(57) **Abstract**

Disclosed are a method for moving an autonomous moving device in a large region, an autonomous moving device, and a storage medium, which belong to the technical field of movements of autonomous moving devices. The method includes: controlling, when it is determined through positioning information of the autonomous moving device that the autonomous moving device moves to a first target location point in the large region, the autonomous moving device to perform a reversing action according to a preset movement strategy, and moving the autonomous moving device to a historical movement location point; controlling the autonomous moving device to perform a large-angle turning action at the historical movement location point according to a preset turning strategy, and moving the autonomous moving device to a first turning location point in the large region; controlling the autonomous moving device to perform a reversing action at the first turning location point, and moving the autonomous moving device to a second target location point in the large region; and controlling the autonomous moving device to continue to perform a moving action at the second target location point until movement operation in the large region is completed.

## Description

### CROSS-REFERENCE TO RELATED APPLICATIONS

The present disclosure claims the benefit of priority to Chinese Patent Application No. 202410703814.5, filed with the CNIPA on May 28, 2024 and entitled "Method for moving autonomous moving device in large region, autonomous moving device, and storage medium", which is incorporated in its entirety herein by reference.

### TECHNICAL FIELD

The present disclosure relates to the movement of autonomous moving devices, and particularly relates to a method for moving an autonomous moving device in a large region, an autonomous moving device, and a storage medium.

### BACKGROUND

In the field of smart yard management, autonomous moving devices, especially lawn mowers, have brought great changes to yard maintenance due to their autonomous working abilities. For example, the lawn mower can be used to mow a specific working region. A core working principle is that according to a preset working region boundary, the lawn mower can autonomously plan a path and perform a corresponding working task. However, the inventor realizes that during practical application, in an excessively large working region, a working region may be missed or incompletely cut when the lawn mower normally moves or turns. That is, it cannot be ensured that grass in the working region after working remains in a neat state, thereby affecting an overall visual effect of the working region for a user.

Therefore, the inventor realizes that it is urgent to find a new technical solution to solve the above technical problem.

### SUMMARY

In view of the above technical problem, a method for moving an autonomous moving device in a large region, an autonomous moving device, and a storage medium are provided to solve the technical problem that a movement operation process of the autonomous moving device affects an overall visual effect in the prior art.

To achieve the above objective, a method for moving an autonomous moving device in a large region is provided. The method includes:
controlling, when it is determined through positioning information of the autonomous moving device that the autonomous moving device moves to a first target location point in the large region, the autonomous moving device to perform a reversing action according to a preset movement strategy, and moving the autonomous moving device to a historical movement location point;
controlling the autonomous moving device to perform a large-angle turning action at the historical movement location point according to a preset turning strategy, and moving the autonomous moving device to a first turning location point in the large region;
controlling the autonomous moving device to perform a reversing action at the first turning location point, and moving the autonomous moving device to a second target location point in the large region; where the second target location point and the first target location point are located at a turning location in the large region; and
controlling the autonomous moving device to continue to perform a moving action at the second target location point until movement operation in the large region is completed.

To achieve the above objective, an autonomous moving device is further provided. The autonomous moving device includes a controller and a memory. The memory stores an autonomous moving device large-region movement program. The controller, when controlling the autonomous moving device large-region movement program to be executed, implements steps as follows:
controlling, when it is determined through positioning information of the autonomous moving device that the autonomous moving device moves to a first target location point in the large region, the autonomous moving device to perform a reversing action according to a preset movement strategy, and moving the autonomous moving device to a historical movement location point;
controlling the autonomous moving device to perform a large-angle turning action at the historical movement location point according to a preset turning strategy, and moving the autonomous moving device to a first turning location point in the large region;
controlling the autonomous moving device to perform a reversing action at the first turning location point, and moving the autonomous moving device to a second target location point in the large region; where the second target location point and the first target location point are located at a turning location in the large region; and
controlling the autonomous moving device to continue to perform a moving action at the second target location point until movement operation in the large region is completed.

To achieve the above objective, a computer-readable storage medium is further provided. The computer-readable storage medium stores a computer program. The computer program, when executed by a processor, implements steps as follows:
controlling, when it is determined through positioning information of an autonomous moving device that the autonomous moving device moves to a first target location point in a large region, the autonomous moving device to perform a reversing action according to a preset movement strategy, and moving the autonomous moving device to a historical movement location point;
controlling the autonomous moving device to perform a large-angle turning action at the historical movement location point according to a preset turning strategy, and moving the autonomous moving device to a first turning location point in the large region;
controlling the autonomous moving device to perform a reversing action at the first turning location point, and moving the autonomous moving device to a second target location point in the large region; where the second target location point and the first target location point are located at a turning location in the large region; and
controlling the autonomous moving device to continue to perform a moving action at the second target location point until movement operation in the large region is completed.

A method for moving an autonomous moving device in a large region provided in the present disclosure includes: controlling, when it is determined through positioning information of the autonomous moving device that the autonomous moving device moves to a first target location point in the large region, the autonomous moving device to perform a reversing action according to a preset movement strategy, and moving the autonomous moving device to a historical movement location point; controlling the autonomous moving device to perform a large-angle turning action at the historical movement location point according to a preset turning strategy, and moving the autonomous moving device to a first turning location point in the large region; controlling the autonomous moving device to perform a reversing action at the first turning location point, and moving the autonomous moving device to a second target location point in the large region, where the second target location point and the first target location point are located at a turning location in the large region; and controlling the autonomous moving device to continue to perform a moving action at the second target location point until movement operation in the large region is completed. In this way, by controlling the autonomous moving device to perform a related action, a probability of missed working region caused by the autonomous moving device in a large region can be reduced, or treatment integrity of the autonomous moving device in the large region can be improved. Further, uniformity after work is completed in the large region can be ensured, and an overall visual effect can be satisfied.

The details of one or more embodiments of the present disclosure are put forward in the following figures and descriptions, and other features and advantages of the present disclosure become apparent from the description, accompanying drawings, and claims.

### BRIEF DESCRIPTION OF DRAWINGS

To describe the technical solutions of the embodiments of the present disclosure more clearly, the accompanying drawings required to be used in the descriptions of the embodiments of the present disclosure are briefly introduced below. Apparently, the accompanying drawings in the following descriptions show merely some embodiments of the present disclosure. Those of ordinary skill in the art can derive other accompanying drawings according to these accompanying drawings without making creative efforts.
FIG. 1 is a schematic flowchart of an embodiment of a method for moving an autonomous moving device in a large region according to the present disclosure;
FIG. 2 is a schematic diagram of an embodiment of a method for moving an autonomous moving device in a large region according to the present disclosure;
FIG. 3 is a schematic diagram of an embodiment of a method for moving an autonomous moving device in a large region according to the present disclosure;
FIG. 4 is a schematic diagram of an embodiment of a method for moving an autonomous moving device in a large region according to the present disclosure;
FIG. 5 is a schematic diagram of an embodiment of a method for moving an autonomous moving device in a large region according to the present disclosure; and
FIG. 6 is a schematic block diagram of an embodiment of an autonomous moving device according to the present disclosure.

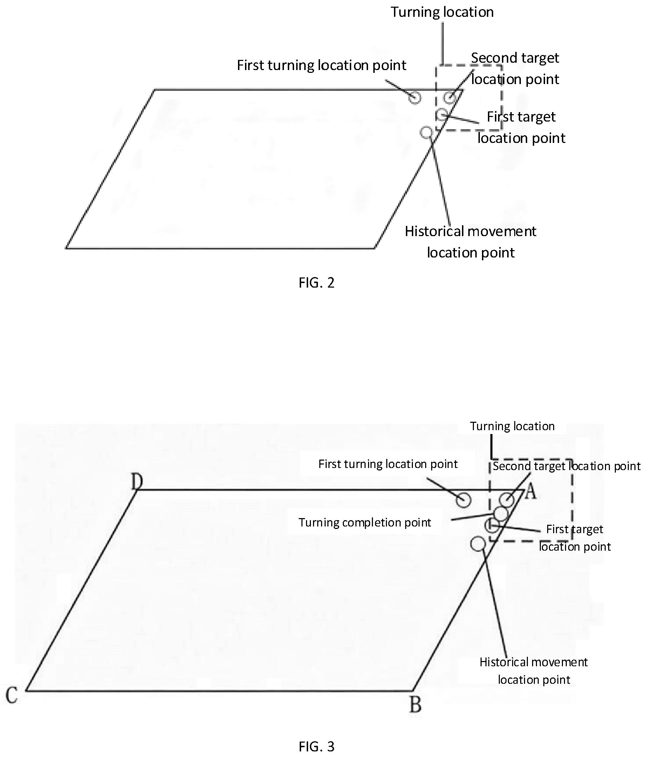

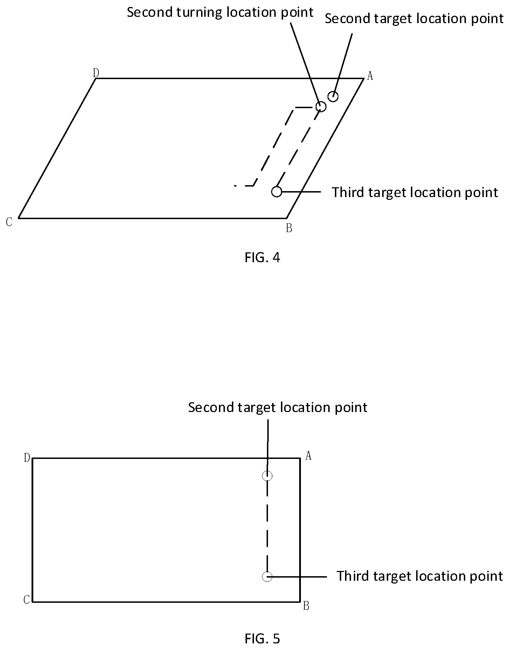

Specifically, A and C illustrated in FIG. 3 and FIG. 4 denote a first preset angle relation, B and D denote a second preset angle relation, and dashed lines in FIG. 4 and FIG. 5 denote planned paths of an autonomous moving device.

### DETAILED DESCRIPTION

The technical solutions of the embodiments of the present disclosure are clearly and completely described below in combination with the accompanying drawings in the embodiments of the present disclosure. Apparently, the described embodiments are merely some embodiments rather than all embodiments of the present disclosure. All other embodiments obtained by those of ordinary skill in the art based on the embodiments of the present disclosure without creative efforts should fall within the scope of protection of the present disclosure.

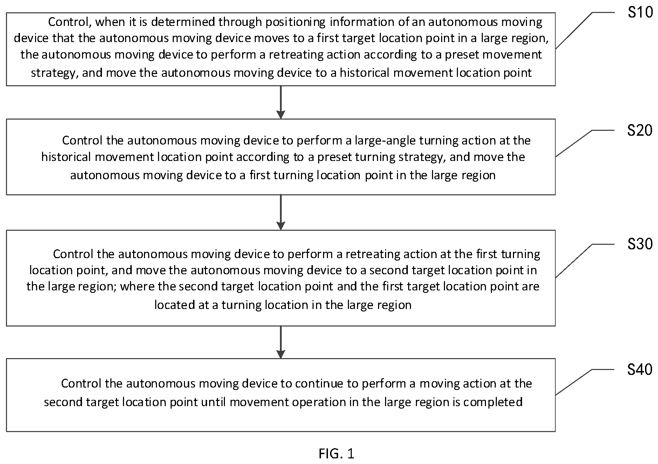

As shown in FIG. 1 and FIG. 2, a working method for an autonomous moving device in a large region provided in an embodiment of the present disclosure may be applied to a controller of an autonomous moving device. The controller may be understood as a micro controller unit (MCU) or other devices having the same function. The method includes steps as follows:
S10, when it is determined through positioning information of the autonomous moving device that the autonomous moving device moves to a first target location point in a large region, the autonomous moving device is controlled to perform a reversing action according to a preset movement strategy, and the autonomous moving device is moved to a historical movement location point.

Understandably, various sensors or components for positioning may be arranged in the autonomous moving device, and include one or more of a real-time kinematic (RTK) positioning sensor, a wheel speed sensor, an inertial measurement unit (IMU) sensor, and a vision sensor. In this way, positioning information can be acquired by the sensors or components. The positioning information may include one or more types of global positioning system (GPS) information, rotation speed information, attitude information, or image information. The large region refers to a working region having a large area. Various plants such as grass can grow in the region. The first target location point may refer to a location point required to be processed in the large region. The first target location point may be a location point at which a turning location of the autonomous moving device is located. When the autonomous moving device moves to the first target location point, the autonomous moving device is required to slowly decelerate and move. The preset movement strategy may refer to a reversing speed of the autonomous moving device, a location point reached after a reversing action, etc. The historical movement location point may refer to a location point traveled during an advancing movement of the autonomous moving device according to a planned path.

S20, the autonomous moving device is controlled to perform a large-angle turning action at the historical movement location point according to a preset turning strategy, and the autonomous moving device is moved to a first turning location point in the large region.

Understandably, the preset turning strategy may refer to turning of the autonomous moving device at a large angle. Moreover, in the turning process, an advancing action and a reversing action of the autonomous moving device are involved, and an acceleration action and a deceleration action are further involved. A specific requirement is to ensure that an excessively large missed working region is not formed after the autonomous moving device turns, that is, to ensure a cleaning effect in a working region. The first turning location point may refer to a location point reached after the autonomous moving device turns. The first turning location point is also a point located in the large region.

S30, the autonomous moving device is controlled to perform a reversing action at the first turning location point, and the autonomous moving device is moved to a second target location point in the large region; where the second target location point and the first target location point are located at a turning location in the large region.

Understandably, the second target location point may refer to another location point required to be processed in the large region. The second target location point may be a location point at which a turning location of the autonomous moving device is located. That is, the first target location point and the second target location point are located at the turning location in the large region at the same time. In addition, the location point may be understood as a region point that cannot be processed by the autonomous moving device in the turning process.

S40, the autonomous moving device is controlled to continue to perform a moving action at the second target location point until movement operation in the large region is completed.

Understandably, the moving action may refer to an advancing movement of the autonomous moving device in a straight line according to a planned path, and grass in the missed working region may be mowed through the advancing movement action. In addition, a trajectory of the planned path may have a parallel relation with a boundary of the large region. Through movement in the parallel relation, it can be ensured that regions of the large region present a uniform cleaning effect. A width between paths may be just equal to a cutting diameter of a mowing blade of the autonomous moving device. Completing the movement operation in the large region is equivalent to performing advancing, turning, and reversing according to a planned path. A movement path may be like a zigzag path. A mark of movement completion is that the autonomous moving device completes the movement operation in the entire large region.

In the embodiments including step S10 to step S40, the autonomous moving device performs automatic movement operation in a large region. After reversing to the historical movement location point from the first target location point in the large region, the autonomous moving device performs a large-angle turning action at the historical movement location point, and finally performs a reversing action at the first turning location point after turning. Moreover, the autonomous moving device continues to perform an advancing movement after reversing. In this way, a probability of missed working region caused by the autonomous moving device in a large region can be reduced, or treatment integrity of the autonomous moving device in the large region can be improved. Further, uniformity after work is completed in the large region can be ensured, and an overall visual effect can be satisfied.

It should be noted that the movement operation of the autonomous moving device may be equivalent to forward traveling work of the autonomous moving device.

In some embodiments, the steps that the autonomous moving device is controlled to perform a reversing action according to a preset movement strategy, and the autonomous moving device is moved to a historical movement location point include:
location adjustment information of the autonomous moving device moving from the historical movement location point to the first target location point is acquired;
a movement path of the autonomous moving device is determined according to the location adjustment information; and
the autonomous moving device is controlled to perform the reversing action at a preset reversing speed according to the movement path until it is determined that a final location point of the autonomous moving device coincides with the historical movement location point.

Understandably, the location adjustment information is pose adjustment information of the autonomous moving device determined according to the positioning information. Specifically, pose adjustment information generated in a process that the autonomous moving device moves from the historical movement location point to the first target location point is recorded by the sensors or components for positioning of the autonomous moving device. For example, small-amplitude turning is performed at a location. Specifically, a normal movement direction is changed by a hard object on the ground. The location adjustment information is acquired from the recorded pose adjustment information. The movement path may refer to a path in which the autonomous moving device reverses to the historical movement location point. The path may be the same as an advancing path of the autonomous moving device from the historical movement location point to the first target location point. The preset reversing speed can be automatically adjusted. In a case that the distance is long enough, the reversing speed may be higher. In a case that the distance is short, the reversing speed may be lower. The lower speed can prevent the situation that the autonomous moving device cannot accurately move to a correct location point. A final location point of the autonomous moving device is equivalent to a current location point after the autonomous moving device stops moving. Location data of the current location point are compared with location data of the recorded historical movement location point. Once the data are the same, it can be determined that the final location point coincides with the historical movement location point.

In the embodiment, by reversing to and coinciding with the historical movement location point, the autonomous moving device can accurately return to a previous location, to improve accuracy of navigation of the autonomous moving device. In addition, the autonomous moving device is controlled to reverse to the historical movement location point of previous work. Thus, the autonomous moving device has enough space to perform a large-angle turning action in a next process.

In some embodiments, as shown in FIG. 3, the step that the autonomous moving device is controlled to perform the reversing action at a preset reversing speed according to the movement path includes:
an angle relation corresponding to the first target location point is acquired, where the angle relation refers to an angle formed by boundaries at which the first target location point is located; and
when it is determined that the angle relation is a first preset angle relation, a wheel speed of a left wheel and a wheel speed of a right wheel of the autonomous moving device are controlled, the reversing action at the preset reversing speed is performed, and a location of the autonomous moving device is adjusted to the historical movement location point corresponding to the movement path.

Understandably, the angle relation may refer to an angle formed by two boundaries in the turning location at which the first location point is located. The angle may vary with a shape of the working region. In a case that the shape of the working region is a rectangular region, the angle may be 90 degrees. In cases of other shapes, the angle relation may be an obtuse angle and an acute angle. The first preset angle relation may refer to the acute angle. Adjustment of a wheel speed of a left wheel and a wheel speed of a right wheel involves a principle of differential drive. That is, two traveling electric motors each control one driving wheel. The reversing action is achieved by adjusting a rotation speed difference between the two electric motors. Reference can be made to a closed-loop control algorithm for the preset reversing speed. The controller of the autonomous moving device monitors an actual speed of the left wheel and an actual speed of the right wheel in real time, and compares the actual speeds with the reversing speed. Current output of the electric motors is adjusted through the closed-loop control algorithm, such that the actual speeds gradually approach the preset reversing speed.

In the embodiment, after it is determined that the angle relation is the first preset angle relation (in a case of an acute angle, a space location is narrow, and the autonomous moving device is required to accurately control a rotation speed of a wheel corresponding to the reversing action), the autonomous moving device can return to the historical movement location point more accurately by adjusting the wheel speed of the left wheel and the wheel speed of the right wheel and the reversing action. Thus, positioning accuracy of the device on the movement path can be ensured.

In some embodiments, as shown in FIG. 3, the step that the autonomous moving device is controlled to perform the reversing action at a preset reversing speed according to the movement path includes:
when it is determined that the angle relation is a second preset angle relation, the autonomous moving device is directly controlled to perform the reversing action at the preset reversing speed according to distance information corresponding to the movement path, and the location of the autonomous moving device is adjusted to the historical movement location point corresponding to the movement path.

Understandably, the second preset angle relation may refer to an obtuse angle. The distance information may refer to a distance corresponding to each movement location point in the movement path.

In the embodiment, after it is determined that the angle relation is the second preset angle relation (in a case of an obtuse angle, the space location is wide, and the autonomous moving device can directly perform a reversing action), the autonomous moving device is directly controlled to reverse through the distance information. The autonomous moving device can return to the historical movement location point more accurately. Positioning accuracy of the device on the movement path can be ensured.

In some embodiments, as shown in FIG. 3, the steps that the autonomous moving device is controlled to perform a reversing action at the first turning location point, and the autonomous moving device is moved to a second target location point in the large region include:
when it is determined that an angle relation corresponding to the first target location point is a first preset angle relation, the autonomous moving device is controlled to perform the reversing action toward the first target location point from the historical movement location point; and
when it is determined that the autonomous moving device moves to a target completion point in the large region, the autonomous moving device is controlled to complete a turning action at the target completion point and perform an advancing action, and the autonomous moving device is moved to the second target location point in the large region, where after the turning action is completed at the target completion point, an orientation of the autonomous moving device is consistent with an orientation of the autonomous moving device at the first turning location point.

Understandably, the first preset angle relation is consistent with the above-mentioned content, and is not repeated herein. The first target location point is located at the turning location, and moving the autonomous moving device to the first location point is equivalent to moving the autonomous moving device to the turning location. The target completion point is also a location point located on the turning location, and a location at which the target completion point is located has an interval relation with the first target location point. The reason why the turning action is completed at the target completion point is that the missed working region is located in a bottom corner region close to the turning location. It is required to adjust a working direction of the autonomous moving device through turning. In this way, the autonomous moving device is required to reverse in a straight line to the turning completion point first, and then perform reversing processing work after turning. The second target location point is the location point mentioned above, and it is required to control the autonomous moving device to reverse to the second target location point subsequently.

In the embodiment, by controlling the autonomous moving device to perform two reversing actions to the turning location, the missed working region caused by turning of the autonomous moving device is processed. Further, uniformity after the work in the large region is completed can be ensured, and an overall visual effect can be ensured.

In some embodiments, as shown in FIG. 4, the step that the autonomous moving device is controlled to continue to perform a moving action at the second target location point until movement operation in the large region is completed includes:
when it is determined that the autonomous moving device is not located at a bottom corner location in the large region, the autonomous moving device is controlled to move to a second turning location point corresponding to the second target location point;
the autonomous moving device is controlled to accelerate and move a preset distance from the second turning location point within first preset time, and the autonomous moving device is controlled to decelerate and move to a third target location point in the large region within second preset time; and
when it is determined that an angle relation corresponding to the third target location point is a first preset angle relation or a second preset angle relation, the autonomous moving device is controlled to perform a turning action in a preset shape at the third target location point until the movement operation is completed in the large region.

Understandably, the autonomous moving device not being located at the bottom corner location in the large region is equivalent to the autonomous moving device being located at the turning location in the planned path. In this case, the autonomous moving device continues to move at the second target location point in the planned path. Preferably, the autonomous moving device in the embodiment moves in the zigzag planned path. The second turning location point is also located in a turning location region in the planned path. The autonomous moving device can move to the second turning location point after turning at the second target location point (the turning process is as controlling the differential speed of the left wheel and the right wheel mentioned above). Acceleration and movement by a preset distance at the second turning location point are performed to move to a next location point, that is, the third target location point. An acceleration speed can be computed through a distance of a body. For example, acceleration is completed through a distance of 3 bodies. The third target location point is located in another turning location region in the planned path. A moving order of the third target location point is located after a moving order of the second target location point in the planned path (the third target location point is only a location point located after the second target location point, and can be considered not to be the same location point as the first target location point, and the first target location point is a location point located before the second target location point). Deceleration and movement to the third target location point in the large region are performed for the autonomous moving device to move to the outside of the boundary of the large region. Turning in a preset shape may refer to a U-shaped turning or turning in other shapes. Specifically, turning processing is performed in a manner of moving a short distance. In the turning process, a rotation speed of one wheel is greater than that of the other wheel.

In the embodiment, by acquiring the second turning location point corresponding to the second target location point and controlling the autonomous moving device to accelerate, decelerate, and move within preset time, the device can move more efficiently in a large region. Unnecessary path deviation and time waste can be reduced, and overall working efficiency can be improved. By controlling the autonomous moving device to move a preset distance within specific time and in combination with a deceleration action and a turning action, it can be ensured that the device accurately reaches the target location point. The control method helps to reduce positioning errors and ensure that the device can work according to a preset path and plan. In a case that it is determined that the angle relation corresponding to the third target location point is the first preset angle relation or the second preset angle relation, the autonomous moving device can automatically perform a turning action in a preset shape. Through the flexible turning strategy, the autonomous moving device can be adapted to requirements of different angles and directions, thereby improving applicability of the autonomous moving device in different environments and scenes.

In some embodiments, as shown in FIG. 5, after the step that the autonomous moving device is controlled to decelerate and move to a third target location point in the large region within second preset time, the method further includes:
when it is determined that the angle relation corresponding to the third target location point is a third preset angle relation, the autonomous moving device is controlled to accelerate and move at the third target location point until the movement operation is completed in the large region.

Understandably, the third preset angle relation may refer to a right angle.

In the embodiment, when it is determined that the turning location of the autonomous moving device is a right angle, that is, a movement path of the autonomous moving device is a straight line, the autonomous moving device is directly controlled to accelerate and move at the third target location point after turning, to improve overall working efficiency.

The present disclosure provides a method for moving an autonomous moving device in a large region, which belongs to the technical field of movements of autonomous moving devices. When it is determined through positioning information of the autonomous moving device that the autonomous moving device moves to a first target location point in the large region, the autonomous moving device is controlled to perform a reversing action according to a preset movement strategy, and the autonomous moving device is moved to a historical movement location point. The autonomous moving device is controlled to perform a large-angle turning action at the historical movement location point according to a preset turning strategy, and the autonomous moving device is moved to a first turning location point in the large region. The autonomous moving device is controlled to perform a reversing action at the first turning location point, and the autonomous moving device is moved to a second target location point in the large region. The second target location point and the first target location point are located at a turning location in the large region. The autonomous moving device is controlled to continue to perform a moving action at the second target location point until movement operation in the large region is completed. In this way, the autonomous moving device performs automatic movement operation in a large region. After reversing to the historical movement location point from the first target location point in the large region, the autonomous moving device performs a large-angle turning action at the historical movement location point, and finally performs a reversing action at the first turning location point after turning. Moreover, the autonomous moving device continues to perform an advancing movement after reversing. In this way, a probability of missed working region caused by the autonomous moving device in a large region can be reduced, or treatment integrity of the autonomous moving device in the large region can be improved. Further, uniformity after work is completed in the large region can be ensured, and an overall visual effect can be satisfied.

It should be understood that in the above embodiments, the sequence numbers of the above steps do not mean the execution order, and the execution order of each process should be determined by its function and internal logic, and should not constitute any limitation on the implementation process of the embodiments of the present disclosure.

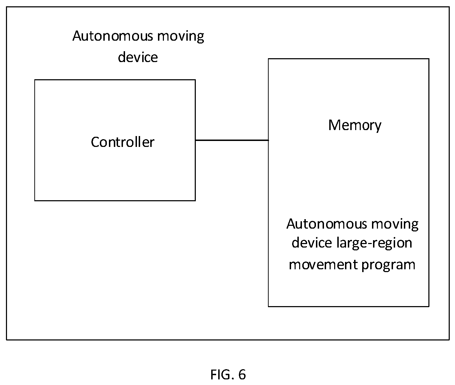

As shown in FIG. 6, an autonomous moving device is further provided. The autonomous moving device includes a controller and a memory. The memory stores an autonomous moving device large-region movement program. The controller, when controlling the autonomous moving device large-region movement program to be executed, implements steps of the method for moving an autonomous moving device in a large region. The autonomous moving device may be a lawn mower applied in a mowing scene, and can be disassembled into a head and a body. A mowing blade may be arranged at a bottom of the head.

Execution functions of the controller correspond to the methods for moving an autonomous moving device in a large region in the above embodiments one by one. For a specific limitation on the controller, reference can be made to the above limitation on the method for moving an autonomous moving device in a large region, which is not repeated herein. For a process performed by each sub-module of the controller, reference can be made to the above limitation on the method for moving an autonomous moving device in a large region, which is not repeated herein, and may be implemented in whole or in part by software, hardware, and their combination. Each sub-module may be embedded in or independent of the controller in a form of hardware, or may be stored in the memory of the controller in a form of software, such that the controller can invoke and execute operations corresponding to the above sub-modules.

In an embodiment, the present disclosure further provides one or more readable storage media storing computer-readable instructions. The readable storage media provided in the embodiment include non-volatile readable storage media and volatile readable storage media. The readable storage media store computer-readable instructions. The computer-readable instructions, when executed by one or more processors, cause the one or more processors to implement the steps of the method for moving an autonomous moving device in a large region described in the above embodiments.

Those of ordinary skill in the art can understand that all or some of flows for implementing the methods in the above embodiments may be implemented by computer-readable instructions instructing related hardware. The computer-readable instructions may be stored in a non-volatile readable storage medium and a volatile readable storage medium. The computer-readable instructions, when executed, may include flows of the embodiments of the above methods. Any reference to a memory, storage, a database, or other media used in the embodiments provided in the present disclosure may include a non-volatile and/or volatile memory. The non-volatile memory may include a read-only (ROM), a programmable ROM (PROM), an electrically programmable ROM (EPROM), an electrically erasable programmable ROM (EEPROM), or a flash memory. The volatile memory may include a random access memory (RAM) or an external cache memory. As an illustration rather than a limitation, the RAM is available in many forms, such as a static RAM (SRAM), a dynamic RAM (DRAM), a synchronous DRAM (SDRAM), a double data rate SDRAM (DDRSDRAM), an enhanced SDRAM (ESDRAM), a Synchlink DRAM (SLDRAM), a Rambus direct RAM (RDRAM), and a direct memory bus dynamic RAM (DRDRAM).

Those skilled in the art can clearly learn that for a purpose of convenient and brief description, division of the above functional units and modules is merely used as an example for description. During actual application, the above functions can be allocated to different functional units and modules for implementation according to a requirement. That is, an inner structure of an autonomous moving device is divided into different functional units or modules, to complete all or some of the functions described above.

The above embodiments are merely used for describing the technical solutions of the present disclosure, rather than limiting the present disclosure. Although the present disclosure is described in detail with reference to the foregoing embodiments, those of ordinary skill in the art should understand that they still can modify the technical solutions described in the foregoing embodiments, or equivalently replace some of the technical features. Moreover, these modifications or substitutions do not cause the essence of the corresponding technical solutions to deviate from the spirit and scope of the technical solutions of all embodiments of the present disclosure, and should all fall within the scope of protection of the present disclosure.

## Claims

1. A method for moving an autonomous moving device in a large region, comprising:
controlling, when it is determined through positioning information of the autonomous moving device that the autonomous moving device moves to a first target location point in the large region, the autonomous moving device to perform a reversing action according to a preset movement strategy, and moving the autonomous moving device to a historical movement location point;
controlling the autonomous moving device to perform a large-angle turning action at the historical movement location point according to a preset turning strategy, and moving the autonomous moving device to a first turning location point in the large region;
controlling the autonomous moving device to perform a reversing action at the first turning location point, and moving the autonomous moving device to a second target location point in the large region, wherein the second target location point and the first target location point are located at a turning location in the large region; and
controlling the autonomous moving device to continue to perform a moving action at the second target location point until movement operation in the large region is completed.

2. The method for moving an autonomous moving device in a large region according to claim 1, wherein the step of controlling the autonomous moving device to perform a reversing action according to a preset movement strategy, and moving the autonomous moving device to a historical movement location point comprises:
acquiring location adjustment information of the autonomous moving device moving from the historical movement location point to the first target location point;
determining a movement path of the autonomous moving device according to the location adjustment information; and
controlling the autonomous moving device to perform the reversing action at a preset reversing speed according to the movement path until it is determined that a final location point of the autonomous moving device coincides with the historical movement location point.

3. The method for moving an autonomous moving device in a large region according to claim 2, wherein the step of controlling the autonomous moving device to perform the reversing action at a preset reversing speed according to the movement path comprises:
acquiring an angle relation corresponding to the first target location point, wherein the angle relation refers to an angle formed by boundaries at which the first target location point is located; and
controlling, when it is determined that the angle relation is a first preset angle relation, a wheel speed of a left wheel and a wheel speed of a right wheel of the autonomous moving device, performing the reversing action at the preset reversing speed, and adjusting a location of the autonomous moving device to the historical movement location point corresponding to the movement path.

4. The method for moving an autonomous moving device in a large region according to claim 3, wherein the step of controlling the autonomous moving device to perform the reversing action at a preset reversing speed according to the movement path comprises:
directly controlling, when it is determined that the angle relation is a second preset angle relation, the autonomous moving device to perform the reversing action at the preset reversing speed according to distance information corresponding to the movement path, and adjusting the location of the autonomous moving device to the historical movement location point corresponding to the movement path.

5. The method for moving an autonomous moving device in a large region according to claim 4, wherein the first preset angle relation is an acute angle, and the second preset angle relation is an obtuse angle.

6. The method for moving an autonomous moving device in a large region according to claim 1, wherein the step of controlling the autonomous moving device to perform a large-angle turning action at the historical movement location point according to a preset turning strategy, and moving the autonomous moving device to a first turning location point in the large region comprises:
controlling a wheel speed of a left wheel and a wheel speed of a right wheel of the autonomous moving device, performing a turning action at a preset turning speed at the historical movement location point, and moving the autonomous moving device to the first turning location point in the large region.

7. The method for moving an autonomous moving device in a large region according to claim 1, wherein the step of controlling the autonomous moving device to perform a reversing action at the first turning location point, and moving the autonomous moving device to a second target location point in the large region comprises:
controlling, when it is determined that an angle relation corresponding to the first target location point is a first preset angle relation, the autonomous moving device to perform the reversing action toward the first target location point from the historical movement location point; and
controlling, when it is determined that the autonomous moving device has moved to a target completion point in the large region, the autonomous moving device to complete a turning action at the target completion point and perform an advancing action, and moving the autonomous moving device to the second target location point in the large region, wherein after the turning action is completed at the target completion point, an orientation of the autonomous moving device is consistent with an orientation of the autonomous moving device at the first turning location point.

8. The method for moving an autonomous moving device in a large region according to claim 1, wherein the step of controlling the autonomous moving device to continue to perform a moving action at the second target location point until movement operation in the large region is completed comprises:
controlling, when it is determined that the autonomous moving device is not located at a bottom corner location in the large region, the autonomous moving device to move to a second turning location point corresponding to the second target location point;
controlling the autonomous moving device to accelerate and move a preset distance from the second turning location point within first preset time, and controlling the autonomous moving device to decelerate and move to a third target location point in the large region within second preset time; and
controlling, when it is determined that an angle relation corresponding to the third target location point is a first preset angle relation or a second preset angle relation, the autonomous moving device to perform a turning action in a preset shape at the third target location point until the movement operation is completed in the large region.

9. The method for moving an autonomous moving device in a large region according to claim 8, wherein after the step of controlling the autonomous moving device to decelerate and move to a third target location point in the large region within second preset time, the method further comprises:
controlling, when it is determined that the angle relation corresponding to the third target location point is a third preset angle relation, the autonomous moving device to accelerate and move at the third target location point until the movement operation is completed in the large region.

10. The method for moving an autonomous moving device in a large region according to claim 9, wherein the third preset angle relation is a right angle.

11. An autonomous moving device, comprising a controller and a memory, wherein the memory stores an autonomous moving device large-region movement program, and the controller controls the autonomous moving device large-region movement program to implement steps as follows:
controlling, when it is determined through positioning information of the autonomous moving device that the autonomous moving device moves to a first target location point in a large region, the autonomous moving device to perform a reversing action according to a preset movement strategy, and moving the autonomous moving device to a historical movement location point;
controlling the autonomous moving device to perform a large-angle turning action at the historical movement location point according to a preset turning strategy, and moving the autonomous moving device to a first turning location point in the large region;
controlling the autonomous moving device to perform a reversing action at the first turning location point, and moving the autonomous moving device to a second target location point in the large region, wherein the second target location point and the first target location point are located at a turning location in the large region; and
controlling the autonomous moving device to continue to perform a moving action at the second target location point until movement operation in the large region is completed.

12. The autonomous moving device according to claim 11, wherein in a case of controlling the autonomous moving device to perform a reversing action according to a preset movement strategy, and moving the autonomous moving device to a historical movement location point, the autonomous moving device large-region movement program is configured to implement steps as follows:
acquiring location adjustment information of the autonomous moving device moving from the historical movement location point to the first target location point;
determining a movement path of the autonomous moving device according to the location adjustment information; and
controlling the autonomous moving device to perform the reversing action at a preset reversing speed according to the movement path until it is determined that a final location point of the autonomous moving device coincides with the historical movement location point.

13. The autonomous moving device according to claim 12, wherein in a case of controlling the autonomous moving device to perform the reversing action at a preset reversing speed according to the movement path, the autonomous moving device large-region movement program is configured to implement steps as follows:
acquiring an angle relation corresponding to the first target location point, wherein the angle relation refers to an angle formed by boundaries at which the first target location point is located; and
controlling, when it is determined that the angle relation is a first preset angle relation, a wheel speed of a left wheel and a wheel speed of a right wheel of the autonomous moving device, performing the reversing action at the preset reversing speed, and adjusting a location of the autonomous moving device to the historical movement location point corresponding to the movement path.

14. The autonomous moving device according to claim 13, wherein in a case of controlling the autonomous moving device to perform the reversing action at a preset reversing speed according to the movement path, the autonomous moving device large-region movement program is configured to implement steps as follows:
directly controlling, when it is determined that the angle relation is a second preset angle relation, the autonomous moving device to perform the reversing action at the preset reversing speed according to distance information corresponding to the movement path, and adjusting the location of the autonomous moving device to the historical movement location point corresponding to the movement path.

15. The autonomous moving device according to claim 11, wherein in a case of controlling the autonomous moving device to perform a reversing action at the first turning location point, and moving the autonomous moving device to a second target location point in the large region, the autonomous moving device large-region movement program is configured to implement steps as follows:
controlling, when it is determined that an angle relation corresponding to the first target location point is a first preset angle relation, the autonomous moving device to perform the reversing action toward the first target location point from the historical movement location point; and
controlling, when it is determined that the autonomous moving device moves to a target completion point in the large region, the autonomous moving device to complete a turning action at the target completion point and perform an advancing action, and moving the autonomous moving device to the second target location point in the large region, wherein after the turning action is completed at the target completion point, an orientation of the autonomous moving device is consistent with an orientation of the autonomous moving device at the first turning location point.

16. A computer-readable storage medium, storing a computer program, wherein the computer program, when executed by a processor, implements steps as follows:
controlling, when it is determined through positioning information of an autonomous moving device that the autonomous moving device moves to a first target location point in a large region, the autonomous moving device to perform a reversing action according to a preset movement strategy, and moving the autonomous moving device to a historical movement location point;
controlling the autonomous moving device to perform a large-angle turning action at the historical movement location point according to a preset turning strategy, and moving the autonomous moving device to a first turning location point in the large region;
controlling the autonomous moving device to perform a reversing action at the first turning location point, and moving the autonomous moving device to a second target location point in the large region, wherein the second target location point and the first target location point are located at a turning location in the large region; and
controlling the autonomous moving device to continue to perform a moving action at the second target location point until movement operation in the large region is completed.

17. The computer-readable storage medium according to claim 16, wherein in a case of controlling the autonomous moving device to perform a reversing action according to a preset movement strategy, and moving the autonomous moving device to a historical movement location point, the computer program is configured to implement steps as follows:
acquiring location adjustment information of the autonomous moving device moving from the historical movement location point to the first target location point;
determining a movement path of the autonomous moving device according to the location adjustment information; and
controlling the autonomous moving device to perform the reversing action at a preset reversing speed according to the movement path until it is determined that a final location point of the autonomous moving device coincides with the historical movement location point.

18. The computer-readable storage medium according to claim 17, wherein in a case of controlling the autonomous moving device to perform the reversing action at a preset reversing speed according to the movement path, the computer program is configured to implement steps as follows:
acquiring an angle relation corresponding to the first target location point, wherein the angle relation refers to an angle formed by boundaries at which the first target location point is located; and
controlling, when it is determined that the angle relation is a first preset angle relation, a wheel speed of a left wheel and a wheel speed of a right wheel of the autonomous moving device, performing the reversing action at the preset reversing speed, and adjusting a location of the autonomous moving device to the historical movement location point corresponding to the movement path.

19. The computer-readable storage medium according to claim 18, wherein in a case of controlling the autonomous moving device to perform the reversing action at a preset reversing speed according to the movement path, the computer program is configured to implement steps as follows:
directly controlling, when it is determined that the angle relation is a second preset angle relation, the autonomous moving device to perform the reversing action at the preset reversing speed according to distance information corresponding to the movement path, and adjusting the location of the autonomous moving device to the historical movement location point corresponding to the movement path.

20. The computer-readable storage medium according to claim 16, wherein in a case of controlling the autonomous moving device to perform a reversing action at the first turning location point, and moving the autonomous moving device to a second target location point in the large region, the computer program is configured to implement steps as follows:
controlling, when it is determined that an angle relation corresponding to the first target location point is a first preset angle relation, the autonomous moving device to perform the reversing action toward the first target location point from the historical movement location point; and
controlling, when it is determined that the autonomous moving device moves to a target completion point in the large region, the autonomous moving device to complete a turning action at the target completion point and perform an advancing action, and moving the autonomous moving device to the second target location point in the large region, wherein after the turning action is completed at the target completion point, an orientation of the autonomous moving device is consistent with an orientation of the autonomous moving device at the first turning location point.
